# EUROPEAN PATENT APPLICATION

(11) **EP 3 477 484 A1**
(43) Date of publication of application: **01.05.2019**
(21) Application number: 17198294.5
(22) Date of filing: 25.10.2017
(51) Int. Cl.: G06F 11/36

(54) **METHOD FOR TESTING A SOFTWARE UPDATE FOR AN ELECTRONIC DEVICE**

(71) Applicant: Vestel Elektronik Sanayi ve Ticaret A.S., 45030 Manisa (TR)
(72) Inventor: Metin, Duygu, 45030 Manisa (TR); Gebizli, Ceren, 45030 Manisa (TR)
(74) Representative: Schmidt, Steffen J.

(57) **Abstract**

The present disclosure relates to a method for testing a software update for an electronic device available with a plurality of different device feature combinations. The method comprises generating (S102) a model comprising a base finite state machine, FSM, representing possible device feature combinations of the electronic device, determining (S104) one or more primary device feature combinations among the possible device feature combinations, and, for each of the one or more primary device feature combinations, performing the steps of: updating (S106) the base FSM by setting transition probabilities between states of the base FSM associated with device feature combinations not including the respective primary device feature combination to 0, generating (S108) one or more test cases from the updated FSM, and performing (S110) one or more tests of the software update for the electronic device in accordance with the generated one or more test cases.

## Description

### Technical Field

The present disclosure generally relates to the field of device testing. More particularly, the present disclosure relates to a method for testing a software update for an electronic device, wherein the electronic device is available with a plurality of different device feature combinations.

### Background

Device testing is a technical task that may form a considerable portion of the product development cycle of an electronic device and generally aims at verifying reliable operability of the electronic device before bringing the device to the market. As an effective approach to device testing, Model-Based Testing (MBT) has been getting increased attention over the recent years and is nowadays employed to simplify and enhance testing activities of various forms.

In MBT, models may be used to represent the behavior of a system under test (SUT), or to represent testing strategies or a test environment, for example. The behavior of a SUT may be modeled by a Markov chain, for example, which can be represented by a finite state machine (FSM) that covers all possible usage scenarios of the SUT. In other approaches, an FSM may be used to represent possible configurations of the SUT, such as possible device feature combinations of an electronic device. Test cases may then be generated automatically from the FSM, which typically involves searching for executable paths in the FSM by traversing the FSM and selecting transitions between the states of the FSM based on given transition probabilities. From the generated test cases, executable test scripts may be generated for automatic test execution. The execution of test scripts may then automatically drive the SUT and generate corresponding test reports. An example of a tool that supports MBT functionality is MaTeLo provided by ALL4TEC.

Once an electronic device is released to the market, further developments of the electronic device are typically made in order to introduce new features and functions to the device and latest developments are usually provided to end users from time to time in the form of software updates that are downloadable through the Internet, for example.

Actual instances of the electronic device, however, may be released with different configurations, e.g., with different device feature combinations, and, therefore, before releasing a software update for the electronic device, the software update should preferably be tested on compatibility with all possible device feature combinations to ensure reliable operation of the electronic device for all end users. An OEM manufacturer of a TV, for example, may produce a particular TV model for different customers and countries and, for each customer and country combination, the TV model may be configured with different software and/or hardware features, such as e.g. with different TV portal software, different screencast/desktop-sharing technologies, different Digital Living Network Alliance (DLNA) options, or the like. This may lead to a massive amount of possible device feature combinations for which the software update should be tested and, due to time and/or budget constraints, it may be hardly impossible to test the software update with all device feature combinations, even using most effective device testing approaches available today, including standard MBT techniques.

It is thus an object of the present disclosure to provide a technique for testing a software update for an electronic device that avoids these, or other, problems.

### Summary

According to the present disclosure, a method for testing a software update for an electronic device available with a plurality of different device feature combinations is provided. The method comprises generating a model comprising a base FSM representing possible device feature combinations of the electronic device, determining one or more primary device feature combinations among the possible device feature combinations, and, for each of the one or more primary device feature combinations, performing the steps of: updating the base FSM by setting transition probabilities between states of the base FSM associated with device feature combinations not including the respective primary device feature combination to 0, generating one or more test cases from the updated FSM, and performing one or more tests of the software update for the electronic device in accordance with the generated one or more test cases.

The electronic device to which the software update is to be applied may be any software-based electronic device, including consumer electronics devices, such as TVs, set-top boxes, smartphones, laptops, refrigerators, cookers, dishwashers, washing machines, air conditioners, and the like. From the viewpoint of a manufacturer, the electronic device may belong to a product family which may be manufactured and provided to end users in different device feature combinations. A device feature combination may correspond to a configuration of the electronic device that includes a particular combination of configurable device features, wherein a device feature may correspond to a software and/or hardware feature (e.g., a particular software and/or hardware component) of the electronic device. The electronic device may in other words be made available in different product variants, wherein, e.g., in the manufacturing process of the electronic device, some of the device features of the electronic device may be configured differently per variant. The device features may include optional features and/or mandatory features for which different alternatives may be selected. In case of a TV, for example, the availability of a TV portal software may be mandatory, wherein, for an actually produced instance of the TV, the used TV portal software may be selected among different alternatives. The software update itself may be provided to enhance the electronic device with new functions and/or to fix known bugs of the electronic device, for example.

The method described herein may correspond to an MBT based testing method in which an FSM-based model may be used to automatically generate test cases and perform tests in accordance therewith. The base FSM of the model may be designed to represent (preferably all) possible device feature combinations of the electronic device, wherein such FSM may in principle be created in any manner known to the person skilled in the art of MBT. Among the possible device feature combinations, one or more primary device feature combinations (i.e., a non-empty proper subset of the possible device feature combinations) may then be determined as device feature combinations for which the software update is to be tested primarily, or, more particularly, for which the software update is to be tested only. The one or more primary device feature combinations may thus represent those device feature combinations among the possible device feature combinations which are considered to be most relevant for the electronic device.

For each primary device feature combination among the one or more primary device feature combinations, the base FSM may then be used as a basis for generating an updated FSM that specifically reflects the respective primary device feature combination and that may eventually be employed for generating the one or more test cases for testing the electronic device in the configuration of the respective primary device feature combination. Each time an updated FSM is generated from the base FSM, the base FSM itself may be retained (i.e., the base FSM itself may remain unchanged) as a basis for generating the next updated FSM.

When generating an updated FSM for a primary device feature combination, transition probabilities between states of the base FSM associated with device feature combinations not including the primary device feature combination may be set to 0. In other words, for the primary device feature combination, transitions between states of the base FSM associated with the remaining device feature combinations among the possible device feature combinations may be eliminated so that these states may no longer be reached when traversing the updated FSM from its start state. In this way, the base FSM may be updated to reflect the primary device feature combination and the one or more test cases generated from the updated FSM may thus only include test cases which specifically cover the primary device feature combination, but which may not cover tests steps for device features not included in the primary device feature combination. The tests of the software update for the electronic device may then be performed in accordance with the generated test cases.

Generating the one or more test cases from the updated FSM and performing the one or more tests of the software update for the electronic device in accordance with the generated one or more test cases may be carried out following known MBT-based procedures. For example, states and/or transitions of the updated FSM may be associated with test steps defining steps to be executed at the respective states and/or transitions, accompanied with expected test results to be verified. The test steps may be included in the base FSM before generating the respective updated FSMs. Test cases may be generated by searching for executable paths in an updated FSM by traversing the updated FSM and selecting transitions between the states of the updated FSM based on given transition probabilities. Each identified executable path may result in a test case, wherein test steps identified along the respective path may be incorporated as test steps to be performed in accordance with the test case when testing is performed. Further, following known MBT-based procedures, executable test scripts may be generated from the test cases for automatic test execution, wherein the execution of the test scripts may automatically drive the electronic device and generate corresponding test reports, for example.

As a result of this procedure, i.e., by generating updated FSMs from the base FSM for each of the one or more primary device feature combinations and only performing tests in accordance with the test cases generated therefrom, the actual tests of the software update for the electronic device performed may be concentrated on device feature combinations of the electronic device which are considered to be most relevant. In this way, the total number of tests performed may be reduced and the test of the software update as a whole may be speeded up, while at the same time making sure that the most relevant functions of the electronic device are still tested on compatibility with the software update. Also, since the base FSM may be retained throughout the procedure and may be iteratively reused as a basis for generating updated FSMs and corresponding test cases that reflect preferred device feature combinations (by eliminating unnecessary transitions in the base FSM, as explained above), the test procedure may generally be simplified for test engineers.

As said, the base FSM may in principle be created to represent the possible device feature combinations of the electronic device in a manner known to the person skilled in the art of MBT. Otherwise, in one particular implementation of the method described herein, the base FSM may be designed assuming a structure in which a device feature combination of the electronic device may comprise one or more feature categories, and wherein each feature category may comprise one or more device features of the electronic device. A device feature of the electronic device may then be reflected by a state of the base FSM and a feature category of the device feature may be reflected by a state of the base FSM preceding the state reflecting the device feature. In other words, in the base FSM, feature categories may correspond to predecessor states of corresponding device features states or, said differently, device features may correspond to successor states of corresponding feature category states. Further, states corresponding to feature categories may be successor states of the start state of the base FSM. Therefore, when updating the base FSM for a primary device feature combination, the transition probabilities set to 0 may comprise at least one of: at least one transition probability between the start state of the base FSM and a state of the base FSM reflecting a feature category, and at least one transition probability between a state of the base FSM reflecting a feature category and a state of the base FSM reflecting a device feature.

As regards the initial setting of transition probabilities between the states of the base FSM, for a state of the base FSM having a plurality of successor states, transitions from the state to the plurality of successor states may have equal transition probabilities before updating the base FSM. For example, all transitions between the start state of the base FSM and the states of the base FSM reflecting feature categories may have equal transition probabilities and, also, all transitions between a state of the base FSM reflecting a feature category and the states of the base FSM reflecting the device features of this feature category may have equal transition probabilities as well. It will be understood, however, that, instead of equal transition probabilities, the probabilities may be set differently to reflect different relevance values among the different device features of the device feature combination to be tested.

In one particular implementation of the method described herein, the base FSM may be generated from an Orthogonal Variability Model (OVM) representing the possible device feature combinations of the electronic device. OVMs correspond to a modeling technique which is known from Software Product Line Engineering (SPLE), a commonly used approach for managing variabilities in a product family being developed. In particular, OVMs may be used to model the device features of an electronic device by means of so called Variation Points (VPs) and Variants (Vs). With reference to the above-described structure of the device feature combinations, a device feature of the electronic device may be reflected by a V of the OVM and a feature category of the device feature may be reflected by a VP of the OVM corresponding to the V. Generating the base FSM from the OVM may in this case include translating the V into a corresponding state of the base FSM reflecting the device feature and translating the VP into a corresponding state of the base FSM reflecting the feature category preceding the state corresponding to the V. Similar to generating the base FSM from the OVM, the OVM may also be helpful in determining the one or more primary device feature combinations for which the software update is to be tested. The one or more primary device feature combinations may thus be determined from the OVM.

Generating the base FSM from the OVM (and, optionally, determining the primary device feature combinations from the OVM) may be advantageous in that the OVM is a model which is typically available from a previous phase in the product development cycle of the electronic device and which may thus be reused for the purpose of generating and updating the base FSM. The base FSM may therefore be generated and updated in a simple manner (by translating the OVM VPs and Vs into corresponding states of the base FSM, as explained above), thereby simplifying FSM generation and facilitating the test procedure for test engineers.

In order to determine which of the possible device feature combinations of the electronic device may be considered to be most relevant for the electronic device, determining the one or more primary device feature combinations may include ranking device feature combinations of actual instances of the electronic device to which the software update is to be applied. In particular, the one or more primary device feature combinations may correspond to a predetermined number of the device feature combinations of the actual instances of the electronic device which are ranked highest. For such ranking, diverse ranking criteria may be employed and, in one such variant, the device feature combinations of the actual instances of the electronic device may be ranked based on counts of the actual instances of the electronic device which satisfy at least one characteristic. In this case, a device feature combination that has the highest count may be taken as the highest ranked device feature combination. Further, the counts may be weighted by predefined weights associated with the at least one characteristic of the actual instances of the electronic device, wherein such characteristic may correspond to a device feature of the electronic device, or any other characteristic associated with the electronic device, such as the country or the customer for which the electronic device has been produced, for example. For performing these calculations, the device feature combinations of the actual instances of the electronic device may be gathered from data collections about the actual instances of the electronic device available at one or more central servers. These collections may correspond to tracking and/or registration data collected over time from the actual instances of the electronic device, for example.

### Brief Description of the Drawings

In the following, the present disclosure will further be described with reference to exemplary implementations illustrated in the figures, in which:
- Figure 1: illustrates a flowchart of a method for testing a software update for an electronic device available with a plurality of different device feature combinations according to the present disclosure;
- Figure 2: illustrates an OVM outlining exemplary product variabilities of a TV as an example of an electronic device according to the present disclosure;
- Figs. 3a and 3b: together illustrate an exemplary base FSM which is generated from the OVM of Figure 2;
- Figure 4: illustrates exemplary data and calculation steps for the determination of primary device feature combinations according to the present disclosure;
- Figure 5: illustrates an exemplary result of the highest ranked device feature combination of the determination according to Figure 4; and
- Figure 6: illustrates the FSM of Figure 3b after updating the same according to the primary device feature combination of Figure 5.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

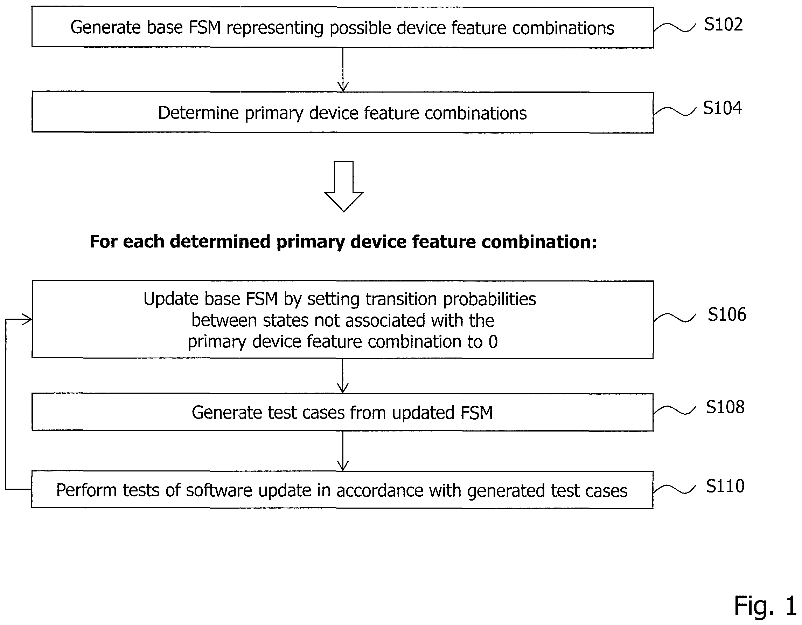

Figure 1 illustrates an exemplary flowchart of a method for testing a software update for an electronic device available with a plurality of different device feature combinations in accordance with the present disclosure. The electronic device may be a software-based electronic device, including consumer electronics devices, such as TVs, set-top boxes, smartphones, laptops, refrigerators, cookers, dishwashers, washing machines, air conditioners, and the like. From the viewpoint of a manufacturer, the electronic device may belong to a product family which may be manufactured and provided to end users in different device feature combinations. A device feature combination may correspond to a configuration of the electronic device that includes a particular combination of configurable device features, wherein a device feature may correspond to a software and/or hardware feature (e.g., a particular software and/or hardware component) of the electronic device. The electronic device may in other words be made available in different product variants, wherein, e.g., in the manufacturing process of the electronic device, some of the device features of the electronic device may be configured differently per variant. The device features may include optional features and/or mandatory features for which different alternatives may be selected. In case of a TV, for example, the availability of a TV portal software may be mandatory, wherein, for an actually produced instance of the TV, the used TV portal software may be selected among different alternatives. The software update itself may be provided to enhance the electronic device with new functions and/or to fix known bugs of the electronic device, for example.

The method shown in Figure 1 corresponds to an MBT based testing method in which an FSM-based model is used to automatically generate test cases and perform tests in accordance therewith. In detail, in step S102, the method comprises generating a model comprising an FSM representing (preferably all) possible device feature combinations of the electronic device, wherein such FSM may in principle be created in any manner known to the person skilled in the art of MBT. Further, in step S104, among the possible device feature combinations, one or more primary device feature combinations (i.e., a non-empty proper subset of the possible device feature combinations) are then determined as device feature combinations for which the software update is to be tested primarily, or, more particularly, for which the software update is to be tested only. The one or more primary device feature combinations may thus represent those device feature combinations among the possible device feature combinations which are considered to be most relevant for the electronic device.

For each primary device feature combination among the determined one or more primary feature combinations, the following steps may then performed in an iterative manner. In step S106, the base FSM may be updated by setting transition probabilities between states of the base FSM associated with device feature combinations not including the respective primary device feature combination to 0. In other words, the base FSM may in this case be used as a basis for generating an updated FSM that specifically reflects the respective primary device feature combination and that may eventually be employed for generating one or more test cases for testing the electronic device having the respective primary device feature combination. In step S108, one or more test cases are generated from the updated FSM and, further, in step S110, one or more tests of the software update for the electronic device are performed in accordance with the generated one or more test cases. If there is a next primary device feature combination among the one or more primary device feature combinations, the method may step back to step S106 and repeat steps S106 to S110 for the next device feature combination. Each time an updated FSM is generated from the base FSM in this process, the base FSM itself may be retained (i.e., the base FSM itself may remain unchanged) as a basis for generating the next updated FSM.

When generating an updated FSM for a primary device feature combination, transition probabilities between states of the base FSM associated with device feature combinations not including the primary device feature combination may be set to 0. In other words, for the primary device feature combination, transitions between states of the base FSM associated with the remaining device feature combinations among the possible device feature combinations may be eliminated so that these states may no longer be reached when traversing the updated FSM from its start state. In this way, the base FSM may be updated to reflect the primary device feature combination and the one or more test cases generated from the updated FSM may thus only include test cases which specifically cover the primary device feature combination, but which may not cover tests steps for device features not included in the primary device feature combination. The tests of the software update for the electronic device may then be performed in accordance with the generated test cases.

Generating the one or more test cases from the updated FSM and performing the one or more tests of the software update for the electronic device in accordance with the generated one or more test cases may be carried out following known MBT-based procedures. For example, states and/or transitions of the updated FSM may be associated with test steps defining steps to be executed at the respective states and/or transitions, accompanied with expected test results to be verified. The test steps may be included in the base FSM before generating the respective updated FSMs. Test cases may be generated by searching for executable paths in an updated FSM by traversing the updated FSM and selecting transitions between the states of the updated FSM based on given transition probabilities. Each identified executable path may result in a test case, wherein test steps identified along the respective path may be incorporated as test steps to be performed in accordance with the test case when testing is performed. Further, following known MBT-based procedures, executable test scripts may be generated from the test cases for automatic test execution, wherein the execution of the test scripts may automatically drive the electronic device and generate corresponding test reports, for example.

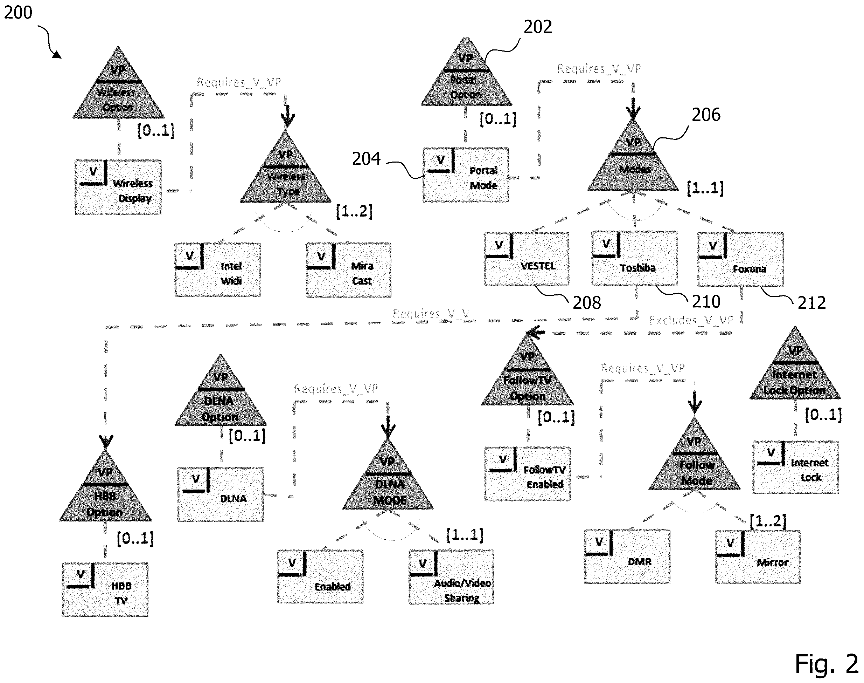

In the following, an exemplary implementation of the method according to Figure 1 will be described with reference to Figures 2 to 6. This description will particularly focus on elucidating steps S102 to S106 by means of a TV as an examplary electronic device.

Figure 2 illustrates an OVM 200 outlining exemplary product variabilities of the TV. OVMs correspond to a modeling technique which is known from SPLE, a commonly used approach for managing variabilities in a product family being developed. OVMs may be used to document the variability of a product line. In an OVM, a Variation Point (VP) documents a variable item and a Variant (V) documents the possible instances of a variable item, wherein both VPs and Vs may be either optional or mandatory. Optional Vs may be grouped in alternative choices whose cardinality may be indicated by [min..max], determining how many Vs may be chosen in an alternative choice, i.e., at least min Vs and at most max Vs of the group. Further, constraints may be defined between VPs and Vs, wherein an "exclude" constraint may specify a mutual exclusion and a "requires" constraint may specify an implication.

An OVM typically defines all mandatory and optional VPs (e.g., product requirements) in the domain to be modeled which, in the exemplary case of Figure 2, is the TV. In Figure 2, it will be understood that only a limited number of selected VPs and Vs is illustrated for the sake of better comprehensibility and that a conventional TV may comprise a multitude of additional VPs and Vs. As shown in Figure 2, the OVM 200 e.g. comprises a VP "Portal Option" 202 having a single V "Portal Mode" 204 which, in turn, "requires" (i.e., has a "requires" constraint with) another VP "Modes" 206 having Vs "VESTEL" 208, "Toshiba" 210 and "Foxuna" 212 as alternative choices. This means that, for an actually produced instance of the TV, the used TV portal software may be selected among the different alternatives "VESTEL", "Toshiba" and "Foxuna". In the OVM 200, VP 202 may also be denoted as a feature category of the TV and the Vs 208, 210 and 212 may be denoted as corresponding device features. As shown in Figure 2, similar VP/V relationships are defined for other VPs, including "Wireless Option", "HBB Option", "DLNA Option", "FollowTV Option" and "Internet Lock Option".

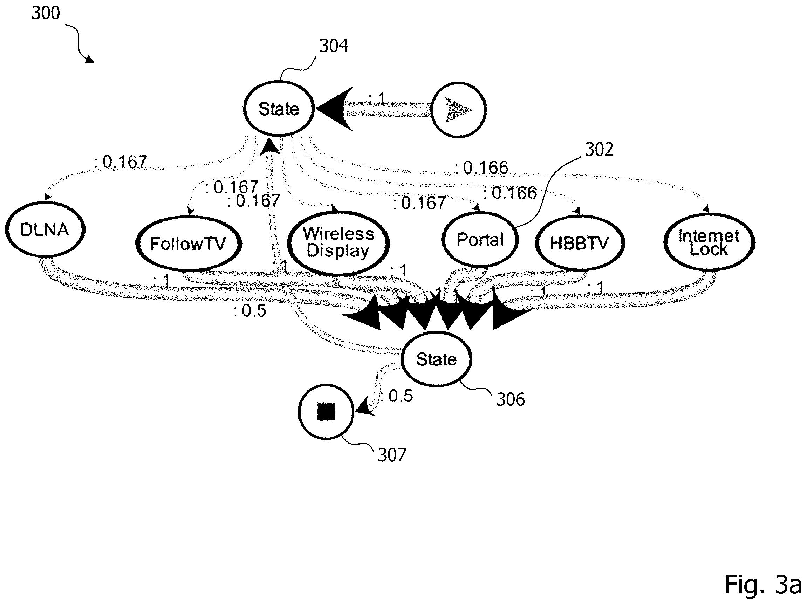

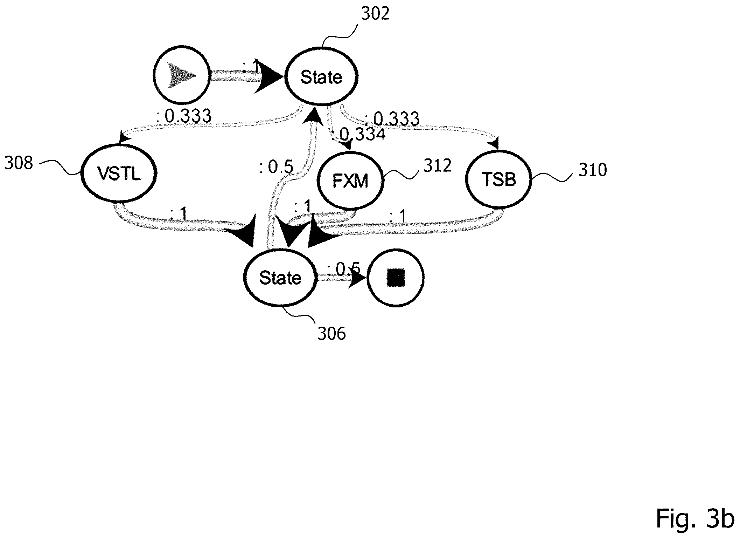

Figures 3a and 3b together illustrate an exemplary base FSM 300 which is generated from the OVM 200. As may be seen in Figure 3a, the base FSM 300 may be generated from the OVM 200 by translating the VPs corresponding to feature categories of the OVM 200, i.e., "Portal Option", "Wireless Option", "HBB Option", "DLNA Option", "FollowTV Option" and "Internet Lock Option", into corresponding states of the base FSM 300. These states are denoted as "Portal", "Wireless Display", "HBBTV", "DLNA", "FollowTV" and "Internet Lock" in Figure 3a. The state "Portal" of the base FSM 300 corresponding to VP "Portal Option" 202 is exemplarily indicated by reference numeral 302. Each of the feature category states is provided as a successor state of the start state 304 of the base FSM 300. As regards the initial setting of transition probabilities between the start state and the feature category states, all transitions between the start state 304 and the respective feature category states have equal transition probabilities of 1/6 (indicated in rounded decimal numbers in Figure 3a). The transitions between the respective feature category states and their successor state 306 each have a transition probability of 1, on the other hand. From state 306, transitions are provided back to state 304 as well as to state 307 where traversal of the base FSM 300 ends. Each of these transitions has a transition probability of 1/2.

Figure 3b illustrates a submodel of the "Portal" feature category state 302 of the base FSM 300 in which the Vs "VESTEL" 208, "Toshiba" 210 and "Foxuna" 212 - shown as possible device feature instances of VP "Portal Option" 202 - have been translated into corresponding states "VSTL" 308, "TSB" 310 and "FXM" 312 in the submodel. It will be understood that the separation of the states 308, 310 and 312 into a submodel is merely made for the sake of clarity of illustration of the FSM 300 (bearing in mind that a single model comprising each and every configuration option of a conventional TV may otherwise become too large and unreadable) and that, effectively, states 308, 310 and 312 correspond to successor states of state 302. For a better understanding, in Figure 3b, the predecessor state of states 308, 310 and 312 is therefore indicated as corresponding to state 302 of Figure 3a and the successor state of states 308, 310 and 312 is indicated as corresponding to state 306 of Figure 3a. As regards the initial setting of transition probabilities between feature category state 302 and corresponding device feature states 308, 310 and 312, all transitions between state 302 and the respective device feature states have equal transition probabilities of 1/3 (indicated in rounded decimal numbers in Figure 3b). It will be understood that the submodel of Figure 3b is not the only submodel of the FSM 300 and that similar submodels may be provided for the remaining feature category states "Wireless Display", "HBBTV", "DLNA", "FollowTV" and "Internet Lock" shown in Figure 3a.

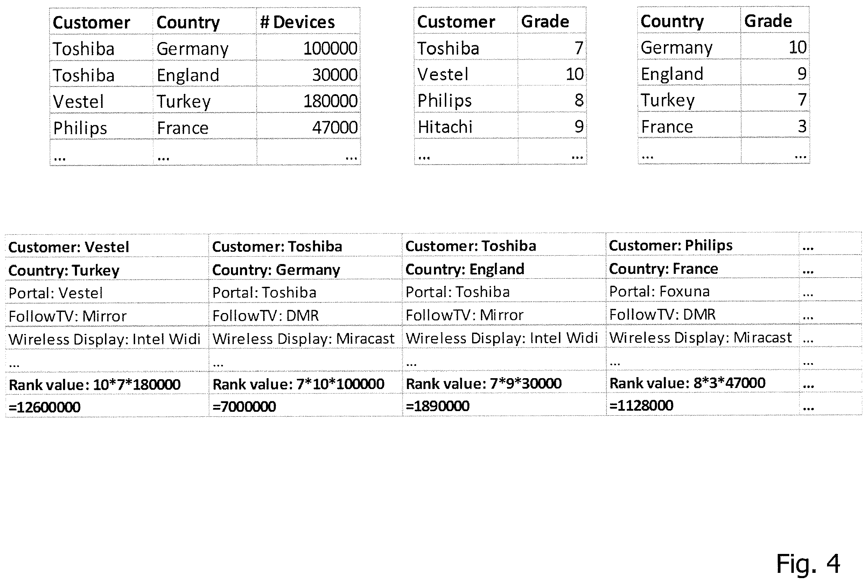

Figure 4 illustrates exemplary data and calculation steps which may be used to determine which of the possible device feature combinations of the TV may be considered to be most relevant for the TV. The data may be gathered from data collections about actual instances of the TV available at one or more central servers. For example, the data collections may correspond to tracking and/or registration data collected over time from the actual instances of the TV, e.g., actual end user devices released to the market. In particular, in order to determine the primary device feature combinations, the device feature combinations of the actual instances of the electronic device to which the software update is to be applied may be ranked. In the example shown, the device feature combinations of the actual instances of the electronic device are ranked based on counts of the actual instances which satisfy a certain customer/country combination, serving as a characteristic for determining the counts of the actual instances which may be useful for an OEM TV manufacturer, for example.

As may be seen in the upper left portion of Figure 4, the number of actual instances of the electronic device per customer/country combination may be determined from the data collections. Further, as may be seen in the upper right portion of Figure 4, for each customer and for each country, a grade may be provided as a predefined weight per customer and country. In order to rank a particular customer/country combination, a rank value for the particular customer/country combination may be calculated as rank value = customer grade * country grade * corresponding count of actual instances. In the lower portion of Figure 4, the results of these calculations are shown, wherein the highest rank value is shown in the first column with decreasing rank values in the following columns. Among the customer/country combinations, a predetermined number of highest ranked combinations may be then taken as the one or more primary device feature combinations for which the software update is to be tested. In the presented example, the combination Vestel/Turkey is ranked highest and will therefore be used in the following as an example of a primary device feature combination, based on which the base FSM 300 is updated.

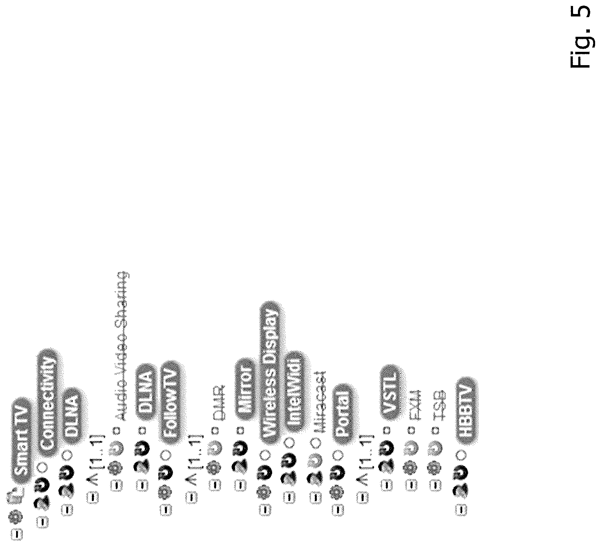

Figure 5 shows an exemplary detailed device feature combination associated with the customer/country combination Vestel/Turkey. As may be seen here, in the feature category "Portal" of the device feature combination, the possible device features "FXM" and "TSB" are removed and the device feature "VSTL" remains. In the feature category "Wireless Display", on the other hand, the device feature "Intel Widi" is selected and the device feature "Miracast" is removed. Similar selections are also made for the remaining feature categories, wherein these selections may be determined from the OVM 200, for example.

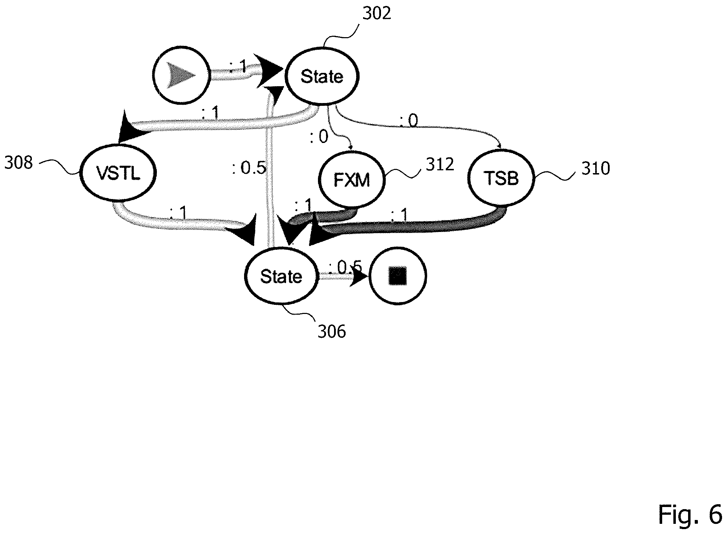

The device feature combination of Figure 5 may be used to generate an updated FSM from the base FSM 300. Figure 6 exemplarily illustrates the corresponding submodel of Figure 3b after updating the FSM 300 in accordance with the device feature combination of Figure 5. As may be seen here, the transition probabilities for the transitions originating from state 302 and leading to states "FXM" 312 and "TSB" 310 are set to 0 in accordance with the removed device features "FXM" and "TSB" depicted in Figure 5. The transition probability for the remaining transition originating from state 302 is adapted accordingly, i.e., in the present example, the transition from state 302 leading to state 308 is adapted to a value of 1. In this way, it is made sure that, when the updated FSM is traversed, states 310 and 312 may no longer be reached and, therefore, when test cases are generated from the updated FSM, these test cases will only include test cases which cover the portal option "VSTL", but will not include test cases covering test steps for the other portal options "FXM" and "TSB". Although not illustrated explicitly, it will be understood that corresponding updates to other submodels of the FSM 300, i.e., submodels corresponding to the remaining feature category states "Wireless Display", "HBBTV", "DLNA", "FollowTV" and "Internet Lock" shown in Figure 3a, may be applied in accordance with the device feature combination of Figure 5 as well so that the updated FSM fully reflects the primary device feature combination associated with the customer/country combination Vestel/Turkey.

In case of a submodel for the feature category state "Wireless Display", for example, the transition probabilities leading to corresponding device feature states "Intel Widi" and "Miracast" may be updated so that the transition probability leading to state "Miracast" is set to 0, whereas the transition probability leading to state "Intel Widi" is set to 1 (i.e., complying with the device feature combination depicted in Figure 5). Therefore, when test cases are generated, these test cases will only include cases which cover the wireless display option "Intel Widi", but will not include test cases covering test steps for the wireless display option "Miracast". Generally, the feature category "Wireless Display" relates to screencast technology (also known as desktopsharing technology) that may enable users to wirelessly stream content from a remote device, such as a smartphone, tablet or other computer, to the TV for presentation on a larger screen. This may include streaming desktop content, music, videos and photos, or interacting with applications sent to the TV from the remote device, for example. Test cases generated for the wireless display option "Intel Widi" (the same may apply when the TV comes with another device feature combination that includes another wireless display option, such as "Miracast") may then comprise one or more test steps to specifically test the wireless display option "Intel Widi", including expected test results to be verified. These test steps may e.g. include initiating one or more of the above-mentioned screencast functions and verifying if these functions work properly. The test steps may also be compiled into an executable test script, the execution of which may automatically drive the TV and generate test reports accordingly.

As has become apparent from the above, by generating updated FSMs from the base FSM for each of the one or more primary device feature combinations and only performing tests in accordance with the test cases generated therefrom, the actual tests of the software update for the electronic device performed may be concentrated on device feature combinations of the electronic device which are considered to be most relevant. In this way, the total number of tests performed may be reduced and the test of the software update as a whole may be speeded up, while at the same time making sure that the most relevant functions of the electronic device are still tested on compatibility with software update. Also, since the base FSM may be retained throughout the procedure and may be iteratively reused as a basis for generating updated FSMs and corresponding test cases that reflect preferred device feature combinations (by eliminating unnecessary transitions in the base FSM, as explained above), the test procedure may generally be simplified for test engineers.

Further, generating the base FSM from the OVM (and, optionally, determining the primary device feature combinations from the OVM) may be advantageous in that the OVM is a model which is typically available from a previous phase in the product development cycle of the electronic device and which may thus be reused for the purpose of generating and updating the base FSM. The base FSM may therefore be generated and updated in a simple manner (by translating the OVM VPs and Vs into corresponding states of the base FSM, as explained above), thereby simplifying FSM generation and facilitating the test procedure for test engineers.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method for testing a software update for an electronic device available with a plurality of different device feature combinations, the method comprising:
generating (S102) a model comprising a base finite state machine, FSM, (300) representing possible device feature combinations of the electronic device;
determining (S104) one or more primary device feature combinations among the possible device feature combinations; and
for each of the one or more primary device feature combinations, performing the steps of:
updating (S106) the base FSM (300) by setting transition probabilities between states (302, 310, 312) of the base FSM (300) associated with device feature combinations not including the respective primary device feature combination to 0;
generating (S108) one or more test cases from the updated FSM; and
performing (S110) one or more tests of the software update for the electronic device in accordance with the generated one or more test cases.

2. The method of claim 1, wherein a device feature combination of the electronic device comprises one or more feature categories, and wherein each feature category comprises one or more device features of the electronic device.

3. The method of claim 1 or 2, wherein a device feature of the electronic device is reflected by a state (308, 310, 312) of the base FSM (300) and a feature category of the device feature is reflected by a state (302) of the base FSM (300) preceding the state (308, 310, 312) reflecting the device feature.

4. The method of claim 3, wherein the transition probabilities set to 0 comprise at least one of:
at least one transition probability between a start state (304) of the base FSM (300) and a state (302) of the base FSM (300) reflecting a feature category; and
at least one transition probability between a state (302) of the base FSM (300) reflecting a feature category and a state (308, 310, 312) of the base FSM (300) reflecting a device feature.

5. The method of any one of claims 1 to 4, wherein, for a state (304; 302) of the base FSM (300) having a plurality of successor states (302; 308, 310, 312), transitions from the state (304; 302) to the plurality of successor states (302; 308, 310, 312) have equal transition probabilities before updating the base FSM (300).

6. The method of any one of claims 1 to 5, wherein the base FSM (300) is generated from an Orthogonal Variability Model, OVM, (200) representing the possible device feature combinations of the electronic device.

7. The method of claim 6, wherein a device feature of the electronic device is reflected by a Variant, V, (208, 210, 212) of the OVM (200) and a feature category of the device feature is reflected by a Variation Point, VP, (202) of the OVM (200) corresponding to the V (208, 210, 212).

8. The method of claim 7, wherein generating the base FSM (300) from the OVM (200) includes translating the V (208, 210, 212) into a corresponding state (308, 310, 312) of the base FSM (300) reflecting the device feature and translating the VP (202) into a corresponding state (302) of the base FSM (300) reflecting the feature category and preceding the state (308, 310, 312) corresponding to the V (208, 210, 212).

9. The method of any one of claims 6 to 8, wherein the one or more primary device feature combinations are determined from the OVM (200).

10. The method of any one of claims 1 to 9, wherein determining (S104) the one or more primary device feature combinations includes ranking device feature combinations of actual instances of the electronic device to which the software update is to be applied.

11. The method of claim 10, wherein the one or more primary device feature combinations correspond to a predetermined number of device feature combinations of the actual instances of the electronic device which are ranked highest.

12. The method of claim 10 or 11, wherein the device feature combinations of the actual instances of the electronic device are ranked based on counts of the actual instances of the electronic device which satisfy at least one characteristic.

13. The method of claim 13, wherein the counts are weighted by predefined weights associated with the at least one characteristic of the actual instances of the electronic device.

14. The method of any one of claims 10 to 13, wherein the device feature combinations of the actual instances of the electronic device are gathered from data collections about the actual instances of the electronic device available at one or more central servers.

## Amended claims

### Amended claims in accordance with Rule 137(2) EPC.

1. A method for testing a software update for an electronic device available with a plurality of different device feature combinations, the method comprising:
generating (S102) a model comprising a base finite state machine, FSM, (300) representing possible device feature combinations of the electronic device;
determining (S104) one or more primary device feature combinations among the possible device feature combinations, the one or more primary device feature combinations corresponding to a non-empty proper subset of the possible device feature combinations for which the software update is to be tested,
wherein a device feature combination of the electronic device comprises one or more feature categories, and wherein each feature category comprises one or more device features of the electronic device, and wherein a device feature of the electronic device is reflected by a state (308, 310, 312) of the base FSM (300) and a feature category of the device feature is reflected by a state (302) of the base FSM (300) preceding the state (308, 310, 312) reflecting the device feature; and
for each of the one or more primary device feature combinations, performing the steps of:
updating (S106) the base FSM (300) by setting transition probabilities between states (302, 310, 312) of the base FSM (300) associated with device feature combinations not including the respective primary device feature combination to 0;
generating (S108) one or more test cases from the updated FSM and generating one or more executable test scripts from the one or more test cases for automatic test execution; and
performing (S110) one or more tests of the software update for the electronic device in accordance with the generated one or more test cases, wherein performing the one or more tests includes executing the one or more test scripts, wherein the execution of the one or more test scripts automatically drives the electronic device.

2. The method of claim 1, wherein the transition probabilities set to 0 comprise at least one of:
at least one transition probability between a start state (304) of the base FSM (300) and a state (302) of the base FSM (300) reflecting a feature category; and
at least one transition probability between a state (302) of the base FSM (300) reflecting a feature category and a state (308, 310, 312) of the base FSM (300) reflecting a device feature.

3. The method of any one of claims 1 or 2, wherein, for a state (304; 302) of the base FSM (300) having a plurality of successor states (302; 308, 310, 312), transitions from the state (304; 302) to the plurality of successor states (302; 308, 310, 312) have equal transition probabilities before updating the base FSM (300).

4. The method of any one of claims 1 to 3, wherein the base FSM (300) is generated from an Orthogonal Variability Model, OVM, (200) representing the possible device feature combinations of the electronic device.

5. The method of claim 4, wherein a device feature of the electronic device is reflected by a Variant, V, (208, 210, 212) of the OVM (200) and a feature category of the device feature is reflected by a Variation Point, VP, (202) of the OVM (200) corresponding to the V (208, 210, 212).

6. The method of claim 5, wherein generating the base FSM (300) from the OVM (200) includes translating the V (208, 210, 212) into a corresponding state (308, 310, 312) of the base FSM (300) reflecting the device feature and translating the VP (202) into a corresponding state (302) of the base FSM (300) reflecting the feature category and preceding the state (308, 310, 312) corresponding to the V (208, 210, 212).

7. The method of any one of claims 4 to 6, wherein the one or more primary device feature combinations are determined from the OVM (200).

8. The method of any one of claims 1 to 7, wherein determining (S104) the one or more primary device feature combinations includes ranking device feature combinations of actual instances of the electronic device to which the software update is to be applied.

9. The method of claim 8, wherein the one or more primary device feature combinations correspond to a predetermined number of device feature combinations of the actual instances of the electronic device which are ranked highest.

10. The method of claim 8 or 9, wherein the device feature combinations of the actual instances of the electronic device are ranked based on counts of the actual instances of the electronic device which satisfy at least one characteristic.

11. The method of claim 10, wherein the counts are weighted by predefined weights associated with the at least one characteristic of the actual instances of the electronic device.

12. The method of any one of claims 8 to 11, wherein the device feature combinations of the actual instances of the electronic device are gathered from data collections about the actual instances of the electronic device available at one or more central servers.
